# EUROPÄISCHE PATENTSCHRIFT

(11) **EP 0 713 014 B1**
(45) Veröffentlichungstag und Bekanntmachung des Hinweises auf die Patenterteilung: **28.04.1999**
(21) Anmeldenummer: 95114990.5
(22) Anmeldetag: 23.09.1995
(51) Int. Cl.: F16B 13/14

(54) **Ankerbolzen zur Verankerung mittels einer Verbundmasse**
Anchor bolt for anchoring by means of a compound mass
Boulon de scellement par du mortier

(30) Priorität: 08.11.1994 DE 4439861
(43) Veröffentlichungstag der Anmeldung: 22.05.1996
(73) Patentinhaber: fischerwerke Artur Fischer GmbH & Co. KG, D-72178 Waldachtal (DE)
(72) Erfinder: Hein, Bernd, Dipl.-Ing. (FH), D-72290 Freudenstadt (DE); Haug, Willi, D-72250 Freudenstadt-Musbach (DE)

(56) Entgegenhaltungen:
- DE-A- 3 727 154
- DE-A- 4 205 616
- DE-A- 4 403 131

## Beschreibung

Die Erfindung betrifft einen Ankerbolzen zur Verankerung in einem Bohrloch eines Bauteils mittels einer Verbundmasse gemäß dem Oberbegriff des Anspruches 1.

Ankerbolzen zur Verankerung mittels einer Verbundmasse in einem Bohrloch eines Bauteils sind üblicherweise als Gewindestange ausgebildet, die an ihrem vorderen Ende eine Keilspitze und am hinteren Ende einen Mitnehmer aufweist. Mit einer Bohrmaschine wird die Gewindestange in ein Bohrloch eingetrieben, in dem die Verbundmasse mittels einer Glasampulle eingebracht ist. Mit der Keilspitze wird die Glasampulle zerstört und gleichzeitig die aus zwei Komponenten bestehende Verbundmasse durch die Drehbewegung des Ankerbolzens im Bohrloch vermengt. Zur Erzielung einer ausreichenden Vermischung der Komponenten im Bohrloch ist ein längeres Drehen des Ankerbolzens erforderlich. Ferner sind zur Montage mit einer Bohrmaschine entsprechende Vorkehrungen am Ankerbolzen und Eindrehwerkzeuge erforderlich, mit denen eine Drehmomentübertragung von der Bohrmaschine auf den Ankerbolzen ermöglicht wird.

Aus der DE 37 27 154 A1 ist ein gattungsgemäßer Ankerbolzen mit über einen Teil seiner Mantelfläche angeordneten Sperrelementen und einem Gewinde an seinem hinteren Ende bekannt, wobei am vorderen Ende des Ankerbolzens ein mit einer Spitze versehener Mischvorsatz angeordnet ist, der auf seiner Mantelfläche ringförmig angeordnete und radial abstehende Nocken aufweist. Diese schaufelartigen Nocken dienen ausschließlich dazu, beim Setzen des Gewindebolzens die Zweikomponenten-Masse durch Drehen des Gewindebolzens insbesondere im Bereich einer in der Bohrlochtiefe vorgesehenen Erweiterungsbohrung innig zu vermischen. Der bekannte Ankerbolzen verbessert somit lediglich die bei den üblichen Gewindestangen allein durch die meißelartige Spitze bewirkte Vermischung, die im Bereich einer Bohrlocherweiterung nicht mehr ausreichend wäre. Bei dem bekannten Ankerbolzen handelt es sich somit um einen speziell für den Einsatz in einem Bohrloch mit einer Bohrlocherweiterung gestalteten Gewindebolzen der in üblicher Weise im Drehgang mittels einer Bohrmaschine gesetzt wird.

Der Erfindung liegt die Aufgabe zugrunde, eine Möglichkeit zu schaffen, jeglichen Ankerbolzen in einfacher Weise auf eine Montage durch Einschlagen bei hohen Haltewerten und kurzen Aushärtzeiten aufgrund einer guten Vermischung der Verbundmasse umrüsten zu können.

Der als separates Teil vorliegende Mischvorsatz kann auf die Stirnseite eines Ankerbolzens, unabhängig von dessen Ausgestaltung, aufgesetzt werden. Aufgrund der erfindungsgemäßen Anordnung der Nocken am Mischvorsatz wird eine Vermischung der Komponenten der Mörtelmasse allein durch eine Vorschubbewegung des Ankerbolzens erreicht. Damit ist es möglich, den Ankerbolzen durch Einschlagen bspw. mit einem Handhammer oder mit einem Bohrhammer, bei dem der Drehgang ausgeschaltet ist, zu setzen.

In Abhängigkeit von der Viskosität der Verbundmasse einerseits und der Korngröße der Zuschlagstoffe andererseits werden die Abstände zwischen den nebeneinander und hintereinander angeordneten Nocken variiert. Bei Verwendung der üblichen Verbundmasse ist es zweckmäßig, die Abstände und die Nockenhöhe so zu wählen, daß sie etwa der Breite des Nockens entsprechen. Damit entspricht die Durchtrittsfläche der Lücke zwischen zwei Nocken etwa der Querschnittsfläche es nachgeordneten und mit der Lücke fluchtenden Nockens.

Zur Reduzierung des Eintreibwiderstandes ist es ferner zweckmäßig, die vordere Stirnfläche der Nocken als Keilspitze auszubilden.

Der Mischvorsatz kann entweder zugfest oder in Zugrichtung lösbar mit dem Ankerbolzen verbunden sein. Die zugfeste Verbindung mit dem Ankerbolzen ist vor allem dann zweckmäßig, wenn eine Verankerung des Ankerbolzens in der Druckzone vorgesehen ist. Da in der Druckzone keine Rißbildung und damit eine Bohrlocherweiterung stattfindet, tritt auch keine axiale Verschiebung des Ankerbolzens ein. Durch die zugfeste Verbindung des Mischvorsatzes mit dem Ankerbolzen bildet der Mischvorsatz eine das Tragverhalten verbessernde Verlängerung des Ankerbolzens.

Bei für den Einsatz in der Zugzone speziell ausgebildeten Ankerbolzen empfiehlt sich eine in Zugrichtung lösbare Verbindung des Mischvorsatzes mit dem Ankerbolzen. Eine solche lösbare Verbindung kann beispielsweise durch eine Zapfen-, Klebe- oder Rastverbindung erreicht werden. Damit löst sich der Mischvorsatz vom Ankerbolzen, um bei einer Bohrlocherweiterung durch Rißbildung das Nachrutschen des Ankerbolzens zur Erzielung eines Spreizeffektes zu ermöglichen.

Die Erfindung wird nachfolgend anhand der in der Zeichnung dargestellten Ausführungsbeispiele näher erläutert.

Es zeigen:
- Figur 1: den Ankerbolzen mit aufgeschraubtem Mischvorsatz,
- Figur 2: den über eine Zapfenverbindung mit dem Ankerbolzen verbundenen Mischvorsatz und
- Figur 3: einen auf die keilförmige Stirnseite eines Ankerbolzens aufgeklebten Mischvorsatz.

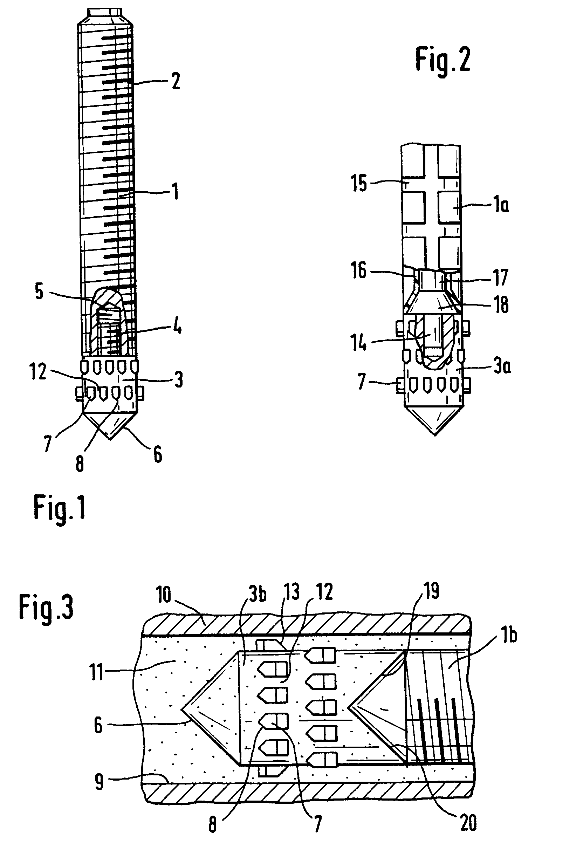

Der in Figur 1 dargestellte Ankerbolzen 1 weist ein durchgehendes Außengewinde 2 auf, das einerseits als Sperrelemente eine zugsichere Verankerung in der ausgehärteten Verbundmasse bietet und andererseits mit seinem das Bauteil überragenden Ende die Befestigung eines Gegenstandes am Bauteil ermöglicht. Am vorderen Ende des Ankerbolzens 1 ist ein Mischvorsatz 3 angeordnet, der über einen Gewindezapfen 4 in einer entsprechenden Gewindebohrung 5 des Ankerbolzens 1 mit diesem fest verbunden ist. Zum leichteren Eindringen in das Bohrloch und zur Zerstörung der Glasampulle weist der Mischvorsatz 3 an seiner Stirnseite eine kegelförmige Spitze 6 auf. Auf der Mantelfläche des Mischvorsatzes 3 sind radial abstehende Nocken 7 angeordnet, die umlaufend und in Achsrichtung in Abständen zueinander stehen.

Aus der vergrößerten Darstellung gemäß Figur 3 ist erkennbar, daß die vordere Stirnfläche der Nocken 7 eine Keilspitze 8 bilden. Durch diese Keilspitze wird der Eintreibwiderstand beim Eintreiben des Ankerbolzens in das Bohrloch 9 des Bauteiles 10 vermindert. Zur Verbesserung der Vermengung der Verbundmasse 11 ist es vorteilhaft, die Nocken 7 in Achsrichtung in der Weise versetzt zueinander anzuordnen, daß der nachgeordnete Nocken jeweils mit der von den beiden vorderen Nocken gebildeten Lücke 12 fluchtet. Zusätzlich können die Nocken 7 eine zum hinteren Ende und in Achsrichtung geneigte Schräge 13 aufweisen.

Bei dem in Figur 2 dargestellten Ausführungsbeispiel des Ankerbolzens 1a ist der Mischvorsatz 3a über einen an der vorderen Stirnseite des Ankerbolzens 1a angeordneten Zapfen 14 lösbar mit dem Ankerbolzen verbunden. Der mit einem Rillen 15 aufweisenden Kunststoffmantel 16 umhüllte Konusbolzen 17 kann bei einer Bohrlocherweiterung durch Rißbildung nach der Verankerung nachrutschen, so daß über den Konus 18 des Konusbolzens 17 ein Spreizeffekt erzielt wird. Die lösbare Zapfenverbindung 14 ermöglicht nunmehr die für die Zugzoneneignung des Ankerbolzens 1a erforderliche axiale Verschiebung. Der Mischvorsatz 3a bleibt aufgrund der auf seiner Mantelfläche angeordneten Nocken 7 unverrückbar im Bereich des Bohrlochgrundes in der Verbundmasse eingebunden.

In Figur 3 ist eine Klebeverbindung 19 zwischen dem Ankerbolzen 1b und dem Mischvorsatz 3b dargestellt. Eine solche Verbindung wird dann verwendet, wenn ein bereits mit Keilflächen 20 ausgestatteter handelsüblicher Ankerbolzen 1b für die Schlagmontage mit einem Mischvorsatz 3b ausgestattet werden soll. Damit sind für die drehende Montage vorgesehene Ankerbolzen nachträglich durch Aufkleben eines Mischvorsatzes für die schlagende Montage umrüstbar. Die Klebeverbindung ist auch für einen Ankerbolzen gemäß Figur 2 verwendbar. In diesem Fall wird die Haftfestigkeit der Klebeverbindung so eingestellt, daß bei der axialen Verschiebung des Ankerbolzens 1a die Klebeverbindung abreißt.

## Patentansprüche

1. Ankerbolzen mit über einen Teil seiner Mantelfläche angeordneten Sperrelementen zur Verankerung in einem Bohrloch eines Bauteils mittels einer Verbundmasse, und einem Gewinde an seinem hinteren Ende zur Befestigung eines Gegenstandes, wobei am vorderen Ende des Ankerbolzens ein mit einer Spitze versehener Mischvorsatz angeordnet ist, der auf seiner Mantelfläche ringförmig angeordnete und radial abstehende Nocken aufweist, **dadurch gekennzeichnet**, daß der Mischvorsatz (3, 3a, 3b) als separates Teil auf der Stirnseite des Ankerbolzens (1) aufgesetzt ist, und daß die Nocken (7) in Achsrichtung in der Weise versetzt zueinander angeordnet sind, daß der nachgeordnete Nocken jeweils mit der von den beiden vorderen Nocken gebildeten Lücke (12) fluchtet.

2. Ankerbolzen nach Anspruch 1, **dadurch gekennzeichnet**, daß die vordere Stirnfläche der Nocken (7) eine Keilspitze (8) bildet.

3. Ankerbolzen nach Anspruch 1, **dadurch gekennzeichnet**, daß die Nocken (7) eine zum hinteren Ende und in Achsrichtung geneigte Schräge (13) aufweisen.

4. Ankerbolzen nach Anspruch 1, **dadurch gekennzeichnet**, daß der Mischvorsatz (3) zugfest mit dem Ankerbolzen (1) verbunden ist.

5. Ankerbolzen nach Anspruch 1, **dadurch gekennzeichnet**, daß der Mischvorsatz (3a) in Zugrichtung lösbar mit dem Ankerbolzen (1a) verbunden ist.

## Claims

1. An anchor bolt having locking elements arranged over part of its outer surface for anchoring by means of a compound mass in a hole drilled in a building component, and having a thread at its rear end for fixing of an article, wherein at the leading end of the anchor bolt there is arranged a mixing attachment provided with a point, the outer surface of which mixing attachment has radially projecting lugs arranged in rings, **characterized in that** the mixing attachment (3, 3a, 3b) is arranged as a separate part on the end face of the anchor bolt (1), and the lugs (7) are arranged offset axially with respect to one another, so that a subsequent lug is aligned in each case with the gap (12) formed by the two preceding lugs.

2. An anchor bolt according to claim 1, characterized in that the leading end face of the lugs (7) is in the form of a tapered point (8).

3. An anchor bolt according to claim 1, characterized in that the lugs (7) have a slope (13) inclining axially towards the rear end.

4. An anchor bolt according to claim 1, characterized in that the mixing attachment (3) is connected to the anchor bolt (1) so that it is resistant to pull.

5. An anchor bolt according to claim 1, characterized in that the mixing attachment (3a) is connected to the anchor bolt (1a) so that it is detachable in the direction of pull.

## Revendications

1. Boulon de scellement comportant des éléments de bridage disposés sur une partie de sa surface latérale pour sceller, au moyen d'une masse composite, un élément dans un trou percé, ainsi qu'un filetage à son extrémité arrière pour y fixer un objet, dans lequel à l'extrémité avant du boulon de scellement est disposé un adaptateur mélangeur, muni d'une pointe, qui présente, sur sa surface latérale, des saillies disposées annulairement et saillant radialement, caractérisé par le fait que l'adaptateur mélangeur (3, 3a, 3b) est, en tant que pièce distincte, posé sur la face frontale du boulon de scellement (1) et que les saillies (7) sont disposées décalées l'une par rapport à l'autre selon la direction axiale de façon que la saillie disposée en arrière soit respectivement alignée avec le jeu (12) formé par les deux saillies avant.

2. Boulon de scellement selon la revendication 1, caractérisé par le fait que la face frontale avant des saillies (7) forme une pointe en forme de coin (8).

3. Boulon de scellement selon la revendication 1, caractérisé par le fait que les saillies (7) présentent un biais (13) incliné vers l'extrémité arrière et selon la direction axiale.

4. Boulon de scellement selon la revendication 1, caractérisé par le fait que l'adaptateur mélangeur (3) est relié au boulon de scellement (1) avec résistance à la traction.

5. Boulon de scellement selon la revendication 1, caractérisé par le fait que l'adaptateur mélangeur (3a) est relié au boulon de scellement (1a) avec possibilité de s'en détacher dans le sens de la traction.
